(19) Europäisches Patentamt
European Patent Office
Office européen des brevets

(11) **EP 4 116 572 B1**

(12) **EUROPÄISCHE PATENTSCHRIFT**

(45) Veröffentlichungstag und Bekanntmachung des Hinweises auf die Patenterteilung:
**10.01.2024  Patentblatt 2024/02**

(21) Anmeldenummer: **21184836.1**

(22) Anmeldetag: **09.07.2021**

(51) Internationale Patentklassifikation (IPC):
**F03D 1/04** (2006.01)      **F03D 7/02** (2006.01)
**F03D 9/45** (2016.01)

(52) Gemeinsame Patentklassifikation (CPC):
**F03D 1/04; F03D 7/0204; F03D 9/45;**
F05B 2240/133; F05B 2240/14; F05B 2240/221;
Y02B 10/30; Y02E 10/728

(54) **ENERGIEUMWANDLUNGSSYSTEM ZUM UMWANDELN VON WINDENERGIE IN ELEKTRISCHE ENERGIE**

ENERGY CONVERSION SYSTEM FOR CONVERTING WIND ENERGY INTO ELECTRICAL ENERGY

SYSTÈME DE CONVERSION D'ÉNERGIE PERMETTANT DE CONVERTIR L'ÉNERGIE ÉOLIENNE EN ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.01.2023  Patentblatt 2023/02**

(73) Patentinhaber: **Immig, Mario**
**55543 Bad Kreuznach (DE)**

(72) Erfinder: **IMMIG, Mario**
**55543 Bad Kreuznach (DE)**

(74) Vertreter: **Metten, Karl-Heinz**
**Boehmert & Boehmert**
**Anwaltspartnerschaft mbB**
**Pettenkoferstrasse 22**
**80336 München (DE)**

(56) Entgegenhaltungen:
**EP-A1- 3 150 847      GB-A- 2 440 264**
**US-A- 4 379 236      US-A1- 2007 009 348**
**US-B2- 10 364 795**

**Beschreibung**

Die Erfindung betrifft ein Energieumwandlungssystem zum Umwandeln von Windenergie in elektrische Energie. Die Erfindung betrifft auch ein Gebäude mit einem solchen Energieumwandlungssystem.

US 4,379,236 A und US 2007/0009348 A1 beschreiben Windenergiegeneratoren.

US 10,364,795 B2 und GB 2 440 264 A betreffen Windräder.

EP 3 150 847 A1 betrifft ein Windkraftmodul für eine Windkraftanlage und ein Verfahren zur Anordnung von Windkraftmodulen.

US 2005/0074324 A1 beschreibt ein Windenergiesystem zum Erzeugen elektrischer Energie.

Windenergieanlagen arbeiten üblicherweise nach dem Auftriebsprinzip, da gemeinhin von der Annahme ausgegangen wird, das Widerstandsprinzip habe einen zu schlechten Wirkungsgrad. Daher findet das Widerstandsprinzip zur Stromerzeugung nahezu keine Beachtung. Konventionelle Windenergieanlagen entnehmen dem natürlich wehenden Wind über einen Rotor Energie. Ein großer Nachteil derartiger konventioneller Windenergieanlagen besteht darin, dass bei niedrigen wie auch bei hohen Windgeschwindigkeiten eine Abschaltung des Rotors erfolgt.

Der vorliegenden Erfindung lag die Aufgabe zugrunde, ein Energieumwandlungssystem zum Umwandeln von Windenergie in elektrische Energie bereitzustellen, die nicht mehr mit den Nachteilen des Stands der Technik behaftet ist. Insbesondere lag der Erfindung die Aufgabe zugrunde ein Energieumwandlungssystem bereitzustellen, das eine besonders effiziente Umwandlung von Windenergie, insbesondere bei niedrigen Windgeschwindigkeiten wie auch bei hohen Windgeschwindigkeiten und/oder wechselnden Windrichtungen, zu gewährleisten. Alternativ oder zusätzlich lag der Erfindung die Aufgabe zugrunde, ein Energieumwandlungssystem bereitzustellen, das ortsunabhängig ist und/oder an einem beliebigen Montageort eingesetzt werden kann. Insbesondere lag der Erfindung die Aufgabe zugrunde, eine Energieumwandlungseinheit beliebiger Größe bereit zu stellen. Eine andere oder zusätzliche Aufgabe lag darin, ein Energieumwandlungssystem bereitzustellen, dass für jedermann, insbesondere Laien, ungeschulte Anwender und Privatanwender, ohne weiteres realisierbar ist. Weiterhin lag eine Aufgabe insbesondere darin, ein besonders umweltfreundlich herstellbares und/oder zu betreibendes Energieumwandlungssystem bereitzustellen.

Demnach ist ein Energieumwandlungssystem zum Umwandeln von Windenergie in elektrische Energie vorgesehen, das mindestens einen Rotor mit Rotormantel, mehrere Windtrichter, ein ortsfestes Gestell und wenigstens eine Stellvorrichtung umfasst. Der mindestens eine Rotor weist eine im Wesentlichen horizontale Drehachse auf. Der mindestens eine Rotor umfasst mehrere sich radial zur Drehachse erstreckende Rotorblätter und einen Rotormantel, der den Rotor vollumfänglich umgibt. Der Rotormantel ist vorzugsweise rohrförmig. Insbesondere umgibt der Rotormantel die durch die Rotorblätter des Rotors aufgespannte Fläche vollständig, vorzugsweise berührungsfrei. Die Energieumwandlungseinheit umfasst mehrere Windtrichter. Ein erster Windtrichter ist im Vorlauf des Rotormantels angeordnet und verjüngt sich in Richtung des Rotormantels. Der erste Windtrichter kann auch als Fangeinrichtung bezeichnet sein. Der Windtrichter weist einen Einlassquerschnitt und einen Auslassquerschnitt. Der Einlassquerschnitt und der Auslassquerschnitt weisen vorzugsweise dieselbe Querschnittsform auf. Der Einlassquerschnitt ist vorzugsweise größer als der Auslassquerschnitt. Vorzugsweise ist eine Diagonalerstreckung des Einlassquerschnitts 1,1 bis 10 mal, insbesondere 1,5 bis 5 mal, vorzugsweise etwa 2 mal so groß wie eine Diagonalerstreckung des Auslassquerschnitts. Der erste Windtrichter umfasst insbesondere eine Windeinstromöffnung, die größer ist als die Querschnittsfläche des Rotormantels. Mithilfe des Rotormantels und der gegen die Windrichtung ausgerichteten Fangeinrichtung kann eine Zwangsdurchströmung der Rotorfläche erreicht werden. Ein zweiter Windtrichter ist im Nachlauf des Rotormantels angeordnet und weitet sich in Richtung von dem Rotormantel fort auf. Der Rotormantel wirkt zusammen mit dem ersten und gegebenenfalls dem zweiten Windtrichter nach Art einer Düse. Das ortsfeste Gestell trägt die mehreren Windtrichter. Mithilfe des Gestells kann das Energieumwandlungssystem an verschiedensten Orten aufgestellt werden, beispielsweise auf einer Land-Oberfläche oder an einer Wasser-Oberfläche. Das ortsfeste Gestell, dass insbesondere Stelzen oder einen Mast umfasst, kann in Vertikalrichtung hervorragen, um den Rotor in einer erhöhten Position anzuordnen. Die wenigstens eine Stellvorrichtung ist dazu ausgelegt und eingerichtet, das Energieumwandlungssystem, insbesondere teilweise, also Bestandteile des Energieumwandlungssystems, oder das vollständige Energieumwandlungssystem, in einer zu einer vorherrschenden Windrichtung korrespondierenden Stellung auszurichten. Dank der Stellvorrichtung kann erreicht werden, dass die Drehachse im Wesentlichen parallel zur Windrichtung ausrichtbar ist, sodass der Wind an jeder Stelle des Rotors in dessen Drehrichtung wirkt. Mithilfe des Gestells und der Stellvorrichtung kann gewährleistet werden, dass unabhängig von der vorherrschenden Windrichtung eine optimale Erfassung des Winds auch bei hohen Windgeschwindigkeiten (Sturm, Böen, Orkanböen) erreicht werden kann. Bei dem erfindungsgemäßen Energieumwandlungssystem kann die Windgeschwindigkeit im Bereich des Rotors gegenüber der Windgeschwindigkeit in der Umgebung der Energieumwandlungseinheit Richtung deutlich erhöht sein, insbesondere um wenigstens 20 %, vorzugsweise um wenigstens 40 %, besonders bevorzugt um wenigstens 60 %. Durch die Erhöhung der Windgeschwindigkeit kann mit der erfindungsgemäßen Energieumwandlungseinheit ein Ertrag erreicht werden, der den Ertrag einer vergleichbaren herkömmlichen Windkraftanlage um ein Vielfaches übersteigt. Ferner gestattet die Verwendung der Energieumwandlungseinheit eine gegenüber herkömmlichen Windenergieanlagen deutlich verbesserte Effizienz, weil sowohl geringe als auch sehr hohe Windgeschwindigkeiten zum Antreiben des Rotors und eines davon betriebenen Generators nutzbar sind. Anders als bei herkömmlichen Windenergieanlagen ist für die Herstellung eines erfindungsgemäßen Energieumwandlungssystems nur ein relativ geringer Materialbedarf erforderlich, ferner kann auf insbesondere großflächige Abholzungen oder Rodungen verzichtet werden und es sind auch keine massiven Fundamente erforderlich. Alternativ kann das Energieumwandlungssystem auf, an oder in einem Schiff oder anderem Schwimmkörper angeordnet sein. So lässt sich infolge verhältnismäßig geringer Investitionskosten für ein Energieumwandlungssystem eine kurze Amortisationsdauer realisieren.

In dem erfindungsgemäßen Energieumwandlungssystems trägt das Gestell die mehreren Windtrichter ortsfest. Dadurch sind die Windtrichter stationär ausgerichtet. Die Stellvorrichtung umfasst den gemeinsam mit dem Rotor relativ zu dem Gestell beweglichen Rotormantel. Erfindungsgemäß ist die Stellvorrichtung schwenkbeweglich und beweglich zwischen einer ersten Stellung, in der ein erster Windtrichter dem Rotormantel vorgelagert ist, und einer zweiten Stellung, in der ein anderer Windtrichter dem Rotormantel vorgelagert ist. Vorzugsweise ist die Stellvorrichtung zwischen genau 2, genau 3, genau 4 oder mehr verschiedenen vorbestimmten Stellungen beweglich, wobei in jeder der vorbestimmten Stellungen je ein Windtrichter als Fangeinrichtung dem Rotormantel und dem darin rotierenden Rotor vorgelagert ist. Insbesondere ist dem Rotormantel stellungsabhängig entweder der erste Windtrichter, der zweite Windtrichter, ein dritter Windtrichter oder ein vierter Windtrichter vorgelagert. Es kann bevorzugt sein, dass in jeder vorbestimmten Stellung, die die Stellvorrichtung einnehmen kann, je ein diffusorartiger Windtrichter dem Rotormantel nachgelagert ist. Eine Konstante, stationäre Ausrichtung der Windtrichter in Bezug auf einen Aufstellungsort, beispielsweise auf einer Land-Oberfläche, gestattet eine besonders stabile Konstruktion, mittels welcher problemlos besonders hohe Windgeschwindigkeiten zum Antreiben des Rotors und eines damit verbundenen Stromgenerators nutzbar sind. Die Anzahl der vorbestimmten Stellungen kann optimiert sein im Hinblick auf typische, am Aufstellort vorherrschende Windrichtungen und/oder auf sich häufig ändernde Windverhältnisse am Aufstellort. Das Gestell mit den Windtrichtern erlaubt in Zusammenwirkung mit der Stellvorrichtung eine gute Anpassbarkeit des Energieumwandlungssystems auch an wechselnde Windverhältnisse, ohne dass eine Abstimmung des Rotors auf wechselnde Windverhältnisse erforderlich wäre, wie es bei konventionellen Windenergieanlagen der Fall wäre.

Gemäß der Erfindung umfasst die Stellvorrichtung einen kugelförmigen Drehkörper, der den Rotormantel trägt, wobei der Drehkörper um eine im Wesentlichen vertikale Schwenkachse relativ zu dem ortsfesten Gestell schwenkbar ist. Der Drehkörper kann als Küken bezeichnet sein. In dem Drehkörper ist der Rotormantel und der darin rotierende Rotor stabil gelagert. Eine Stellvorrichtung mit Drehkörper kann Führungen und/oder Lagerungen umfassen, die dazu ausgelegt und eingerichtet sind, eine variable Ausrichtbarkeit des Rotormantels zu gestatten und gleichzeitig eine rigide Halterung bereitzustellen, welche hohen Kräften widerstehen kann, wie sie beispielsweise bei Orkanböen zu erwarten sind.

Bei einer anderen Ausführungsform der Erfindung, die mit den vorgenannten kombinierbar ist, umfasst das Gestell ein Gehäuse, insbesondere ein kubisches Gehäuse. Mindestens eine Außenseite des Gehäuses formt den mindestens einen Windtrichter. Es kann bevorzugt sein, dass das Gehäuse den Rotormantel sowie gegebenenfalls den Drehkörper, insbesondere die Stellvorrichtung, vollumfänglich umgibt. Vorzugsweise umfasst das Gehäuse wenigstens so viele Außenseiten, wie das Energieumwandlungssystem Windtrichter umfasst, wobei jeder Außenseite ein Windtrichter zugeordnet sein kann. Es ist denkbar, dass ein Windtrichter oder mehrere Windtrichter verschiedenen Außenseiten zugeordnet sind. Es kann bevorzugt sein, dass eine 1 zu 1 Zuordnung von Außenseiten und Windtrichter vorgesehen ist. Die Anzahl der Außenseiten kann die Anzahl der Windtrichter übersteigen, oder umgekehrt. Ein derartiges Energieumwandlungssystem erlaubt eine sehr kompakte Bauweise, sowie eine Verwendung des Energieumwandlungssystems auch bei üblicherweise als kritisch betrachteten Witterungsbedingungen, zum Beispiel bei Gewitter, ohne signifikante Gefahr, etwa durch Blitzeinschläge.

Es kann bevorzugt sein, dass das Gehäuse eine polygonale Grundfläche aufweist, insbesondere kann es bevorzugt sein, dass das Gehäuse eine polygonale Grundfläche mit einer geraden Anzahl von Seiten, vorzugsweise eine viereckige Grundfläche, aufweist. Es kann vorzugsweise vorgesehen sein, dass die Grundflächen paarweise Raum parallel, beispielsweise mit einer Nord-Süd/Ost-West- oder einer Nordost-Südwest/Nordwest-Südost-Ausrichtung, angeordnet sind.

Alternativ oder zusätzlich kann vorgesehen sein, dass das Gehäuse eine, insbesondere orthogonale, polyedrische oder pyramidale Grundform aufweist. Die Grundform dehnt sich quer zu der Grundfläche aus. Vorzugsweise ist die Grundform an die örtlichen Gegebenheiten am Aufstellort angepasst.

Bei einer weiteren Ausführungsform, die mit den vorigen kombinierbar ist, weist das Gehäuse wenigstens ein an dem Gestell gehaltenes Segel auf. Das Segel bildet mindestens eine sich verjüngende Trichterinnenseite und/oder eine insbesondere sich verjüngende Trichteraußenseite. Vorzugsweise bildet je wenigstens ein Segel je wenigstens einen Windtrichter. Es kann bevorzugt sein, dass verschiedenen Windtrichter mehrere unterschiedliche Segel zugeordnet sind. Zusätzlich oder alternativ kann eine Seitenfläche, insbesondere mehrere Seitenflächen, vorzugsweise alle Seitenflächen, sowie gegebenenfalls eine Dachfläche des Energieumwandlungssystems des durch ein Segel, insbesondere verschiedene Segel, gebildet sein.

Gemäß einer Ausführungsform, die mit den vorigen kombinierbar ist, weist das Gestell eine Fachwerkstruktur auf, die insbesondere Querstreben, horizontale Längsstreben und/oder vertikale Balken umfasst oder daraus besteht. Das Gestell kann insbesondere ausschließlich eine Haltekonstruktion für den Rotormantel und/oder das gehaltene Segel realisieren. Ein Energieumwandlungssystem mit einem aus einer Fachwerkstruktur zusammengesetzten Gestell kann besonders leicht montiert werden und erlaubt eine sehr stabile Konstruktion. Vorzugsweise umfasst das Fachwerk-Gestell wenigstens einen vertikalen Balken, welcher einen Mast bildet, und/oder mehrere vertikale Balken, die Stelzen bilden.

Bei dem erfindungsgemäßen Energieumwandlungssystem, ist der mindestens eine Windtrichter, insbesondere der erste, der zweite und/oder gegebenenfalls weitere Windtrichter, pyramidenstumpfförmig. Die Fangeinrichtung, d. h. der jeweils dem Rotormantel vorgelagerte Windtrichter, wie auch nachgelagerte Windtrichter, können eine Einlass-Querschnittsform aufweisen, die beispielsweise quadratisch, eckig, insbesondere dreieckig, viereckig, trapezförmig oder vieleckig ist. Es kann bevorzugt sein, dass die durch die Seitenflächen festgelegte Grundform angepasst ist an die jeweilige Einlass-Querschnittsform. Insbesondere sind mehrere, vorzugsweise alle, Einlass-Querschnittsformen des Energieumwandlungssystems gleich.

Alternativ oder zusätzlich kann bei einem Energieumwandlungssystem der Rotor in einem Axialabstand zu den mehreren Windtrichter angeordnet sein. Zwischen dem inneren Ende eines jeweiligen Windfangtrichters, wo der Windfangtrichter auf den Rotormantel stößt, und dem eigentlichen Rotor erstreckt sich der Axialabstand. Durch das Vorsehen eines Axialabstand kann gewährleistet werden, dass der Wind auf den Rotor nun in dessen Drehrichtung trifft.

Weiterhin kann eine Energieumwandlungseinheit mit mindestens eine Anzeige, wie eine Werbeanzeige, und/oder mindestens eine Beleuchtung, wie eine LED-Beleuchtung, ein Farbenspiel, eine Festbeleuchtung beispielsweise zu Weihnachten, oder ähnlichem, ausgestattet sein.

Die für einen stationären Einsatz ausgelegte und eingerichtete Energieeinheit kann mit einem Fahrzeug oder einem Fahrzeug-Anhänger verbunden sein. Eine Energieeinheit kann insbesondere verbunden sein mit einem Wohnwagen oder Wohnmobil, um dieses mit elektrischer Energie zu versorgen.

Die Erfindung betrifft ferner ein Gebäude mit mehreren Gebäudeaußenseiten und mindestens einer Dachfläche. Erfindungsgemäß ist das Gebäude mit einem Energieumwandlungssystem ausgestattet, das wie zuvor beschrieben ausgeführt sein kann. Das Gebäude kann beispielsweise ein Hochhaus realisieren, ein Mehrfamilienhaus, ein Gewerbegebäude, eine Lagerhalle, eine Tankstelle, ein Krankenhaus, ein Nichtwohngebäude, oder ein Einfamilienhaus. Alternativ kann das Gebäude ein Gartenhaus oder Kinderspieleinrichtung sein. Der Einsatz eines erfindungsgemäßen Energieumwandlungssystems an einem Gebäude erlaubt die Erzeugung elektrischer Energie aus Windenergie auch innerhalb von dicht besiedelten Gebieten, beispielsweise Ballungsgebieten oder Industriegebieten, wo keine konventionellen Windenergieanlagen aufgestellt werden können.

Gemäß einer Weiterbildung eines Gebäudes mit einem Energieumwandlungssystem kann vorgesehen sein, dass der erste Windtrichter und/oder zweite Windtrichter an einer vertikalen Gebäudeaußenseite und/oder an einer Dachfläche angeordnet sind. Beispielsweise kann ein Windtrichter an einer vertikalen Gebäudeaußenseite unterhalb eines Giebels angeordnet sein. Es ist denkbar, dass bei einem Gebäude mit Flachdach mehrere Windtrichter an verschiedenen Gebäudeaußenseiten unterhalb des Flachdachs angeordnet sind. Das Energieumwandlungssystem kann vorzugsweise in eine Gebäudefassade oder ein Gebäudedach integriert sein.

Bei einer Weiterbildung des Gebäudes, die mit der vorherigen kombinierbar ist, sind der erste Windtrichter und/oder der zweite Windtrichter an einer geneigten Dachfläche angeordnet. Beispielsweise kann ein Windtrichter an einer Satteldachfläche angeordnet sein.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken. Dabei zeigen

Figur 1a    eine Vorderansicht eines Energieumwandlungssystems mit kubischem Gehäuse;

Figur 1b    eine Seitenansicht des Energieumwandlungssystems gemäß Figur 1a;

Figur 1c    eine schematische Draufsicht auf das Energieumwandlungssystem gemäß Figur 1a;

Figur 1d    eine perspektivische Ansicht des Energieumwandlungssystems gemäß Figur 1a;

Figur 2a    eine Vorderansicht eines Energieumwandlungssystems mit pyramidenförmigem Gehäuse;

Figur 2b    eine Seitenansicht des Energieumwandlungssystems gemäß Figur 2a;

Figur 2c    eine schematische Draufsicht auf das Energieumwandlungssystem gemäß Figur 2a;

Figur 3a    eine Vorderansicht eines Gebäudes mit einem Energieumwandlungssystem;

Figur 3b    eine Seitenansicht des Gebäudes gemäß Figur 3a;

Figur 3c    eine schematische Draufsicht auf das Gebäude gemäß Figur 3a;

Figur 3d    eine perspektivische Ansicht des Gebäudes gemäß Figur 3a;

Zur Vereinfachung der Lesbarkeit werden in der nachfolgenden Beschreibung bevorzugter Ausführungsformen der Erfindung für dieselben oder ähnliche Komponenten in verschiedenen Ausführungsformen dieselben oder ähnliche Bezugszeichen verwendet.

Ein erfindungsgemäßes Energieumwandlungssystem 1 umfasst als wesentliche Bestandteile zumindest einen Rotor 3 innerhalb eines Rotormantels 33, verschiedene um den Rotor angeordnete Windtrichter 5, 51, 52, 53, 54, ein ortsfestes Gestell 10 und wenigstens eine Stellvorrichtung 6, um das Energieumwandlungssystem entsprechend einer vorherrschenden Windrichtung auszurichten.

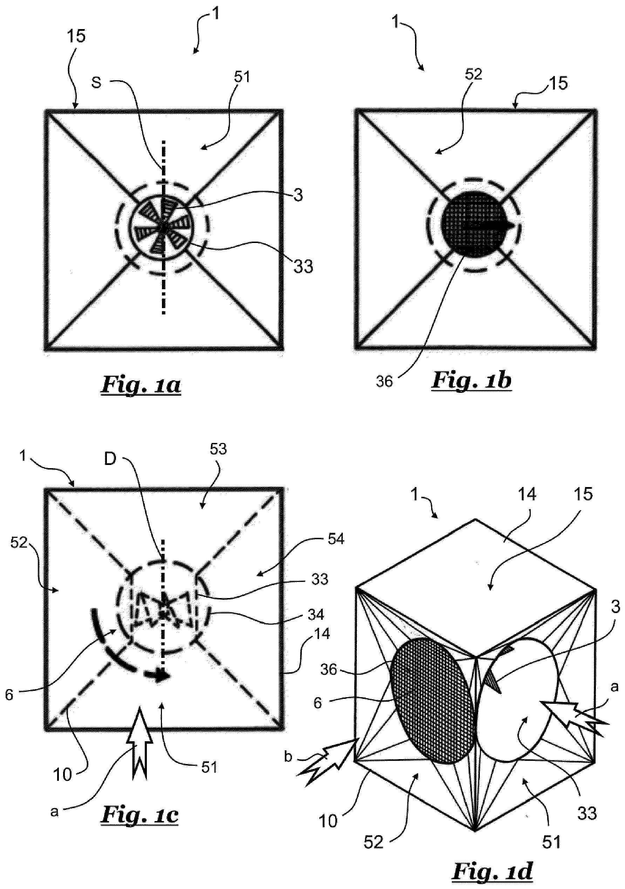

Figuren 1a - 1d zeigen ein Energieumwandlungssystem 1, dessen Gestell 10 ein kubisches Gehäuse 14 umfasst. Das Gestell 10 dient einer stationären Positionierung des Energieumwandlungssystems 1. Das kubische Gehäuse 14 könnte zum Beispiel auf einem Flachdach eines mehrstöckigen Gebäudes angeordnet werden, um dieses durch das Energieumwandlungssystem 1 mit elektrischer Energie zu versorgen. Alternativ könnte das Gestell 14 auf einem Fahrzeuganhänger transportiert werden um an einer zum Auffangen von Windenergie günstigen Stelle positioniert zu werden.

Die seitlichen Außenflächen des Gehäuses 14 sind durch vier gleichartige pyramidenstumpfförmige Windtrichter 5, 51, 52, 53, 54 realisiert. Das Energieumwandlungssystem 1 ist in verschiedenen Größen realisierbar. Die Kantenlänge der Energieumwandlungssystem kann im Bereich von 1 m bis 20 m liegen. Das Gehäuse 14 hat ferner eine flache, ebene oder leicht geneigte Oberseite 15. Es ist denkbar, dass mehrere kubische Energieumwandlungssysteme1 übereinander gestapelt sind (nicht abgebildet).

Innerhalb des Gehäuses 14 und von dem Gestell 10 getragen ist eine Stellvorrichtung 6 untergebracht die dazu ausgelegt und eingerichtet ist, den Rotor 3 entsprechende vorherrschenden Windbedingung auszurichten. Die Drehachse D des Rotors 3 ist im Wesentlichen horizontal ausgerichtet. Eine gegenwärtig vorherrschende Windrichtung a ist schematisch in den Figuren 1c und 1d gezeigt. Mittels der Stellvorrichtung 6 ist der Rotor 3 in dem Rotormantel 33 ideal dafür ausgerichtet, bei der vorherrschenden Windrichtung a hocheffizient Windenergie zu erfassen, damit diese in elektrische Energie umgewandelt werden kann. Die vorherrschende Windrichtung a korrespondiert zu der Ausrichtung des ersten Windtrichters 51. Der Wind wird durch den ersten Windtrichter 51 beziehungsweise die Fangeinrichtung zum Rotormantel 33 geführt. Mithilfe der Fangeinrichtung kann ein wesentlich größeres Windvolumen zum Rotor 3 geführt werden, um diesen anzutreiben, als bei einer konventionellen Windenergieanlage.

Der aus der vorherrschenden Windrichtung a kommende Wind wird durch den ersten Windtrichter 51 zum Rotormantel 33 geführt und treibt den Rotor 3 an. Hinter dem Rotor 3 strömt der Wind aus dem Rotormantel 33 durch den dritten Windtrichter 53 hinaus.

Quer zu der vorherrschenden Windrichtung a sind ein zweiter Windtrichter 52 und ein vierter Windtrichter 54 ausgerichtet. Wie in Fig. 1b zu erkennen, ist die Stellvorrichtung 6 so ausgerichtet, dass eine Außenseite 36 des Rotormantels 33 den zweiten und vierten Windtrichter 52, 54 verschließt, sodass keine Verluste im Bereich des Rotors 3 anfallen.

Sollte sich die vorherrschende Windbedingung ändern und der Wind in einer anderen Windrichtung b wehen, die zu der Ausrichtung des zweiten Windtrichter 52 korrespondiert, ist die Stellvorrichtung 6 dazu ausgelegt und eingerichtet, den Rotormantel 33 mit dem darin angeordneten Rotor 3 neu auszurichten, sodass Wind entsprechend der anderen Windrichtung b durch den zweiten Windtrichter 52 zum Rotor 3 geführt würde. Zu diesem Zweck kann ein Drehkörper 34, der als Küken bezeichnet werden kann, um die vertikale Schwenkachse S gedreht werden, bei der hier dargestellten exemplarischen Ausführungsform beispielsweise um etwa 90°. So kann eine ineffiziente Queranströmung des Rotors 3 vermieden werden.

Die Windtrichter 5, 51, 52, 53, 54 und der Rotormantel 33 können mit verschiedenen Einrichtungen zur Verbesserung des Wirkungsgrades ausgestattet sein. Am weiten Einlass-Umfang eines Windfangtrichters 5 kann ein Flanschkragen vorgesehen sein, der in der Windrichtung eine Abschirmung in der unmittelbaren Umgebung des Windtrichters 5 bewirkt, damit am Ausgang Verwirbelungen vorliegen, die einen Unterdruck bedingen, welcher das Ausströmen der Luft erleichtert. Alternativ kann der Windtrichter 5 außenumfänglich in einem Abstand von einer Leiteinrichtung umgeben sein, die Wind entsprechend der Strömung im Windfangtrichter führt, sodass der Staudruck im Windfangtrichter reduziert wird (Strahldüsenfunktion). Die Innenseite eines Windtrichters 5 kann durch umfängliche Einschnürungen geformt sein, die eine lokale Querschnittsverminderung und nachfolgende Querschnittserweiterung bewirken, um den Staudruck zu reduzieren. Zusätzlich oder alternativ kann an der schmalen Ausgangsöffnung des Windtrichters 5 ein radial nach außen gewölbter, umfänglicher Kragen vorgesehen sein, der einen Unterdruckbereich in der Außenumgebung des Windtrichters bewirkt, was das Ausströmen der Luft erleichtert. Es kann bevorzugt sein, mehrere der vorgenannten Einrichtungen zu kombinieren.

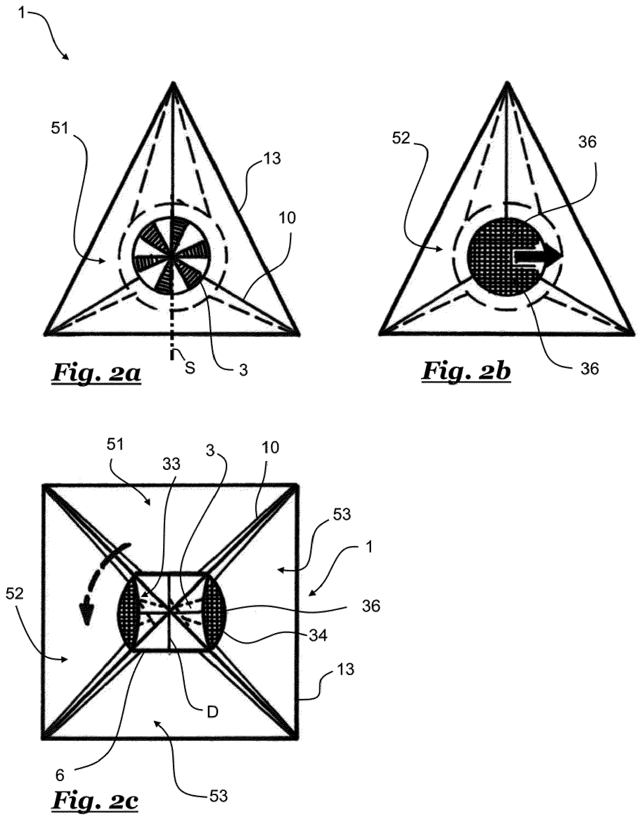

Die Figuren 2a bis 2c zeigen eine andere Ausführungsform eines Energieumwandlungssystems 1 mit pyramidenförmigem Gehäuse 13. Das pyramidenförmige Gehäuse 13 hat eine quadratische Grundfläche, wie in der Draufsicht gemäß Fig. 2c zu erkennen ist. Die verschiedenen Windtrichter 51, 52, 53, 54 sind Dreiecks-Pyramidenstumpf-förmig. Mit Ausnahme der Form des Gehäuses 13 gilt für das Energieumwandlungssystem 1 im Wesentlichen dasselbe wie bezüglich des zuvor anhand der Figuren 1a bis 1d beschriebenen Energiewandlungssystems 1.

Das Gehäuse 13 kann so geformt sein, dass der kugelförmigen Drehkörper 34 in den von den Windtrichtern 51, 52, 53, 54 aufgespannten Raum axial beziehungsweise radial hineinragt. Die geschlossenen Außenumfangsflächen 36 können gewölbt sein, um eine stufenlose Schwenkbeweglichkeit des Drehkörpers 34 um die vertikale Schwenkachse S im Gestell 10 zu gestatten.

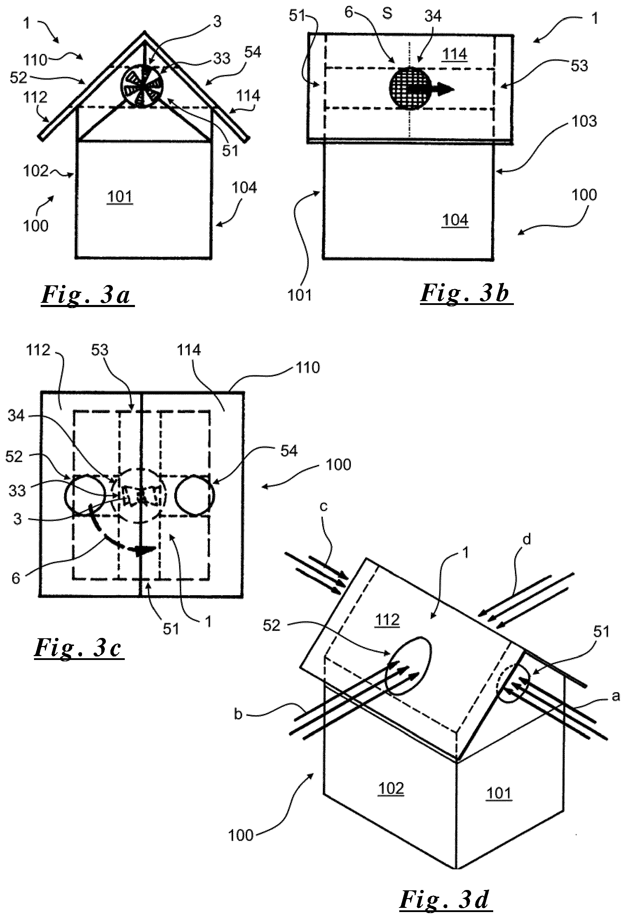

Die Figuren 3a bis 3d zeigen exemplarisch ein Gebäude 100, dass mit einem erfindungsgemäßen Energieumwandlungssystem 1 ausgestattet ist. Das hier exemplarisch abgebildete Gebäude 100 hat ein Satteldach 110. Einander gegenüberliegende schräge Dachflächen 112, 114 bedecken das Gebäude 100. Das Gebäude hat vertikale Gebäudeaußenseiten 101, 102, 103, 104, die in einem Rechteck angeordnet sind. Wind kann in verschiedenen Windrichtungen a, b, c, d gegen das Gebäude 100 wehen.

Das Energieumwandlungssystem 1 des Gebäudes 100 ist im Wesentlichen aufgebaut und funktioniert wie das zuvor in Bezug auf die Figuren 1a-1d beschriebene Energieumwandlungssystem. Ein westlicher Unterschied liegt in der Form des Gehäuses, dass durch das Satteldach 110 mit zwei schrägen Dachflächen 112, 114 und die vertikalen Gebäudeaußenseiten 101, 103 unterhalb des Giebels gebildet ist. In die vertikalen Gebäudeaußenseiten 101 und 103 unterhalb des Giebels und in die schrägen Dachflächen 112, 114 sind versetzt zueinander Windtrichter 51, 52, 53, 54 vorgesehen, die zu dem Rotor 3 führen. Der Rotor 3 ist von dem Rotormantel 33 umgeben in einem kugelförmigen Drehkörper 34 der Stellvorrichtung 6 untergebracht. Die Ausrichtung der Stellvorrichtung 6 und damit des Rotors 3 kann an eine aktuell vorherrschende Windrichtung a, b, c oder d angepasst werden. Zwischen dem jeweiligen Windtrichter 51, 52, 53, 54 und dem Rotor 3 kann unterhalb des Daches 110 eine Kanalstruktur vorgesehen sein, um den Wind aerodynamisch zu dem Rotor 3 zu leiten.

Wie der nachfolgend dargestellten Tabelle zu entnehmen ist, kann mithilfe des neuartigen Energieumwandlungssystems im Vergleich zu konventionellen Windkraftanlagen ein Vielfaches an elektrischer Energie gewonnen werden.

**Konstanten / Parameter:**

| Faktor ½ | Wirkungsgrad Cp Veirtikal-WKA | Wirkungsgrad Cp Horizontal-WKA | Wirkungsgrad Cp Erfindung | Dichte ρ [kg/m³] | Fläche A [m²] |
|---|---|---|---|---|---|
| 0,5 | 0,4 | 0,5 | 0,85 | 1,2 | 1,766 |

| Pos.-Nr. # | Geschwindigkeit $v_{Wind}$ [m/s] | Geschwindigkeit $v_{Wind}^{-}$ [m/s] | Zeit t [h] | Ertrag [Wh] Vertikal-WKA | Ertrag [Wh] Horizontal-WKA | Ertrag [Wh] Erfindung |
|---|---|---|---|---|---|---|
| 1 | 0,9 | 1,5 | 583,3 | 180,2 | 225,3 | 1635,0 |
| 2 | 1,9 | 3,1 | 1882,6 | 5472,9 | 6841,2 | 50513,1 |
| 3 | 2,9 | 4,7 | 1890,3 | 19540,1 | 24425,1 | 176760,5 |
| 4 | 3,9 | 6,3 | 1493,6 | 37551,7 | 46939,7 | 336369,7 |
| 5 | 4,9 | 7,9 | 1141,3 | 56910,2 | 71137,7 | 506806,3 |
| 6 | 5,9 | 9,5 | 746,4 | 64972,5 | 81215,6 | 576372,6 |
| 7 | 5,9 | 11,2 | 451,0 | 62795,1 | 78493,9 | 570678,5 |
| 8 | 7,9 | 12,8 | 249,8 | 52200,6 | 65250,8 | 471827,5 |
| 9 | 8,9 | 14,4 | 132,8 | 39679,9 | 49599,8 | 357145,5 |
| 10 | 9,9 | 16,0 | 79,3 | 32612,2 | 40765,3 | 292545,9 |
| 11 | 10,9 | 17,6 | 46,3 | 25413,4 | 31766,7 | 227342,1 |
| 12 | 11,9 | 19,3 | 24,1 | 17213,1 | 21516,4 | 156045,0 |
| 13 | 12,9 | 20,9 | 13,6 | 12374,0 | 15467,5 | 111824,9 |
| 14 | 13,9 | 22,5 | 6,7 | 7626,4 | 9533,0 | 68735,8 |
| 15 | 14,9 | 24,1 | 2,8 | 3925,7 | 4907,1 | 35299,6 |
| 16 | 15,9 | 25,7 | 1,8 | 3066,7 | 3833,3 | 27519,0 |
| 17 | 16,9 | 27,4 | 1,0 | 2045,8 | 2557,2 | 18527,3 |
| 18 | 17,9 | 29,0 | 0,8 | 1944,7 | 2430,9 | 17573,0 |
| 19 | 18,9 | 30,6 | 0,5 | 1430,7 | 1788,4 | 12903,1 |
| 20 | 19,9 | 32,2 | 0,2 | 668,0 | 835,0 | 6013,9 |
| 21 | 20,9 | 33,8 | 0,3 | 1160,8 | 1451,0 | 10433,6 |
| 22 | 21,9 | 35,5 | 0,3 | 1335,5 | 1669,4 | 12088,4 |
| Summe Ertrag [KWh] | | | | 450,1 | 562,7 | 4045,0 |

Der Ertrag E in Wh lässt sich bestimmen mit der Formel:

$$E = \tfrac{1}{2} \times c_P \times \rho \times A \times v_{Wind} \times t$$

wobei

$c_P$ - den Wirkungsgrad, der bekanntlich bei herkömmlichen Vertikal-Windkraftanlagen 40%, bei horizontal-Windkraftanlagen 50% und bei einem erfindungsgemäßen Energieumwandlungssystem unter Annahme einer ungünstigen oder "schlechten" Systemkonfiguration bei wenigstens 85% liegt;

$\rho$ - die Dichte der Luft

A - die wirksame Fläche der Energieumwandungsanlage, wobei zu Vergleichszwecken von einem gleichen Rotordurchmesser von 1,5 m ausgegangen wird,

$v_{Wind}$ - die Windgeschwindigkeit bzw.

$v_{Wind*}$ - die Windgeschwindigkeit am Rotor bei der erfindungsgemäßen Energieumwandlungseinheit infolge der Wirkung des Windtrichters, der zu einer Erhöhung der Windgeschwindigkeit von 62% oder mehr führt,

t - die durchschnittliche Zeit pro Jahr, wobei t und $v_{Wind}$ bezogen sind auf Messungen der Windgeschwindigkeit durch den Deutschen Wetterdienst am Flughafen Frankfurt am Main im Zeitraum vom 1. Januar 2018 bis 31. Dezember 2019,

bezeichnet.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Energieumwandlungssystem (1) zum Umwandeln von Windenergie in elektrische Energie, umfassend:

   mindestens einen Rotor (3) mit im Wesentlichen horizontaler Drehachse (D), umfassend mehrere sich radial zur Drehachse (D) erstreckende Rotorblätter (31),
   einen Rotormantel (33), der den Rotor vollumfänglich umgibt;
   mehrere Windtrichter (5, 51, 52, 53, 54), wobei ein erster Windtrichter (5, 51, 52, 53, 54) im Vorlauf des Rotormantels (33) angeordnet ist und sich in Richtung des Rotormantels verjüngt, und wobei ein zweiter Windtrichter (5, 51, 52, 53, 54) im Nachlauf des Rotormantels (33) angeordnet ist und sich in Richtung von dem Rotormantel (33) fort aufweitet,
   ein ortsfestes Gestell (10), das die mehreren Windtrichter (5, 51, 52, 53, 54) ortsfest trägt, ferner umfassend wenigstens eine Stellvorrichtung (6), die dazu ausgelegt und eingerichtet ist, das Energieumwandlungssystem (1) in einer zu einer vorherrschenden Windrichtung (a, b, c, d) korrespondierenden Stellung auszurichten, wobei die mehreren Windtrichter (5, 51, 52, 53, 54) pyramidenstumpfförmig sind,
   wobei die Stellvorrichtung (6) einen kugelförmigen Drehkörper (34) umfasst, der den Rotormantel (33) trägt,
   wobei der Drehkörper (34) um eine im Wesentlichen vertikale Schwenkachse (S) relativ zu dem ortsfesten Gestell (10) schwenkbar ist, und
   wobei die Stellvorrichtung den gemeinsam mit dem Rotor (3) relativ zu dem Gestell (10) beweglichen, insbesondere schwenkbeweglichen, Rotormantel (33) umfasst zwischen einer ersten Stellung, in der ein erster Windtrichter (5, 51, 52, 53, 54) dem Rotormantel (33) vorgelagert ist, und einer zweiten Stellung, in der ein anderer Windtrichter (5, 51, 52, 53, 54) dem Rotormantel (33) vorgelagert ist.

2. Energieumwandlungssystem (1) nach Anspruch 1, **dadurch gekennzeichnet, dass**

   die Stellvorrichtung (6) zwischen vier verschiedenen Stellungen beweglich ist und/oder
   dass dem Rotormantel (33) stellungsabhängig entweder der erste Windtrichter (51), der zweite Windtrichter (52), ein dritter Windtrichter (53) oder ein vierter Windtrichter (54) vorgelagert ist.

3. Energieumwandlungssystem (1) nach einem der vorstehenden Ansprüche, **dadurch gekennzeichnet, dass** das Gestell (10) eine Fachwerkstruktur aufweist, die insbesondere Querstreben, horizontale Längsstreben und/oder vertikale Balken umfasst oder daraus besteht.

4. Energieumwandlungssystem (1) nach einem der vorstehenden Ansprüche, **dadurch gekennzeichnet, dass** der Rotor (3) in dem Rotormantel (33) in einem Axialabstand zu den mehreren Windtrichtern (5, 51, 52, 53, 54) angeordnet ist.

5. Gebäude (100) mit mehreren Gebäudeaußenseiten und mindestens einer Dachfläche, **gekennzeichnet durch** ein Energieumwandlungssystem (1) nach einem der vorstehenden Ansprüche.

6. Gebäude (100) nach Anspruch 5, **dadurch gekennzeichnet, dass** der erste Windtrichter (5, 51, 52, 53, 54) und/oder der zweite Windtrichter (5, 51, 52, 53, 54) an einer vertikalen Gebäudeaußenseite (101, 102, 103, 104) und/oder Dachfläche (112, 114) angeordnet ist.

7. Gebäude (100) nach Anspruch 5 oder 6, **dadurch gekennzeichnet, dass** der erste Windtrichter (5, 51, 52, 53, 54) und/oder der zweite Windtrichter (5, 51, 52, 53, 54) in einer geneigten Dachfläche (112, 114) angeordnet sind.

**Claims**

1. An energy conversion system (1) for converting wind energy into electrical energy, comprising:

   at least one rotor (3) having a substantially horizontal rotational axis (D), comprising a plurality of rotor blades (31) extending radially with respect to the rotational axis (D),
   a rotor mantle (33) which completely surrounds the rotor,
   a plurality of wind funnels (5, 51, 52, 53, 54),
   a first wind funnel (5, 51, 52, 53, 54) being arranged upstream of the rotor mantle (33) and tapering towards the rotor mantle, and
   a second wind funnel (5, 51, 52, 53, 54) being arranged downstream of the rotor mantle (33) and widening in the direction leading away from the rotor mantle (33), a fixed frame (10) which supports the plurality of wind funnels (5, 51, 52, 53, 54) stationary,
   further comprising at least one adjustment device (6) adapted and arranged to orient the energy conversion system (1) in a position corresponding to a prevailing wind direction (a, b, c, d),
   wherein the plurality of wind funnels (5, 51, 52, 53, 54) is frustopyramidal,
   wherein the adjustment device (6) comprises a cylindrical or spherical rotary body (34) which supports the rotor mantle (33),
   wherein the rotary body (34) being pivotable about an essentially vertical pivot axis (S) relative to the fixed frame (10), and
   wherein the adjustment device comprises the rotor mantle (33), which is movable, in particular pivotable, together with the rotor (3) relative to the frame (10) between a first position in which a first wind funnel (5, 51, 52, 53, 54) is arranged upstream of the rotor mantle (33), and a second position in which another wind funnel (5, 51, 52, 53, 54) is arranged upstream of the rotor mantle (33).

2. The energy conversion system (1) according to Claim 1, **characterized in that** the adjustment device (6) is movable between four different positions and/or that the first wind funnel (51), the second wind funnel (52), a third wind funnel (53) or a fourth wind funnel (54) is arranged upstream of the rotor mantle (33), depending on the position.

3. The energy conversion system (1) according to any of the preceding claims, **characterized in that** the frame (10) has a framework structure in particular comprising or consisting of transverse struts, horizontal longitudinal struts and/or vertical beams.

4. The energy conversion system (1) according to any of the preceding claims, **characterized in that**

the rotor (3) is arranged in the rotor mantle (33) at an axial distance from the plurality of wind funnels (5, 51, 52, 53, 54).

5. A building (100) having multiple building outer sides and at least one roof side, **characterized by**
an energy conversion system (1) according to any of the preceding claims,

6. The building (100) according to Claim 5, **characterized in that**
the first wind funnel (5, 51, 52, 53, 54) and/or the second wind funnel (5, 51, 52, 53, 54) is arranged on a vertical building outer side (101, 102, 103, 104) and/or roof side (112, 114).

7. The building (100) according to Claim 5 or 6 **characterized in that**
the first wind funnel (5, 51, 52, 53, 54) and/or the second wind funnel (5, 51, 52, 53, 54) are arranged in an inclined roof side (112, 114).

**Revendications**

1. Système de conversion d'énergie (1) pour convertir de l'énergie éolienne en énergie électrique, comprenant :

au moins un rotor (3) avec un axe de rotation (D) essentiellement horizontal,
comprenant plusieurs pales de rotor (31) s'étendant radialement par rapport à l'axe de rotation (D), une enveloppe de rotor (33) qui entoure le rotor sur toute sa périphérie, plusieurs entonnoirs (5, 51, 52, 53, 54),
dans lequel un premier entonnoir (5, 51, 52, 53, 54) est disposé à l'avant de l'enveloppe de rotor (33) et se rétrécit en direction de l'enveloppe de rotor, et dans lequel un deuxième entonnoir (5, 51, 52, 53, 54) est disposé à l'arrière de l'enveloppe de rotor (33) et s'élargit en s'éloignant de l'enveloppe de rotor (33), un bâti fixe (10) qui supporte de manière fixe les plusieurs entonnoirs (5, 51, 52, 53, 54), comprenant en outre au moins un dispositif de réglage (6) qui est conçu et agencé pour orienter le système de conversion d'énergie (1) dans une position correspondant à une direction de vent prédominante (a, b, c, d),
les plusieurs entonnoirs (5, 51, 52, 53, 54) étant en forme de pyramide tronquée,
le dispositif de réglage (6) comprenant un corps rotatif sphérique (34) qui supporte l'enveloppe de rotor (33),
le corps rotatif (34) pouvant pivoter autour d'un axe de pivotement (S) essentiellement vertical par rapport au bâti fixe (10), et
le dispositif de réglage comprenant l'enveloppe de rotor (33) mobile, en particulier pivotante, conjointement avec le rotor (3) par rapport au bâti (10) entre une première position, dans laquelle un premier entonnoir (5, 51, 52, 53, 54) est monté en amont de l'enveloppe de rotor (33), et une deuxième position, dans laquelle un autre entonnoir (5, 51, 52, 53, 54) est monté en amont de l'enveloppe de rotor (33).

2. Système de conversion d'énergie (1) selon la revendication 1, **caractérisé en ce que** le dispositif de réglage (6) est mobile entre quatre positions différentes et/ou **en ce que** soit le premier entonnoir (51), le deuxième entonnoir (52), un troisième entonnoir (53) ou un quatrième entonnoir (54) est monté en amont de l'enveloppe de rotor (33) en fonction de la position.

3. Système de conversion d'énergie (1) selon l'une quelconque des revendications précédentes, **caractérisé en ce que** le bâti (10) présente une structure en treillis, qui comprend en particulier des traverses, des longerons horizontaux et/ou des poutres verticales ou en est constituée.

4. Système de conversion d'énergie (1) selon l'une quelconque des revendications précédentes, **caractérisé en ce que** le rotor (3) est disposé dans l'enveloppe de rotor (33) à une distance axiale des plusieurs entonnoirs (5, 51, 52, 53, 54).

5. Bâtiment (100) comprenant plusieurs côtés extérieurs de bâtiment et au moins une surface de toit, **caractérisé par** un système de conversion d'énergie (1) selon l'une quelconque des revendications précédentes.

6. Bâtiment (100) selon la revendication 5, **caractérisé en ce que**
le premier entonnoir (5, 51, 52, 53, 54) et/ ou le deuxième entonnoir (5, 51, 52, 53, 54) est disposé sur un côté extérieur de bâtiment vertical (101, 102, 103, 104) et/ou une surface de toit (1 12, 1 14).

7. Bâtiment (100) selon la revendication 5 ou 6, **caractérisé en ce que**
le premier entonnoir (5, 51, 52, 53, 54) et/ ou le deuxième entonnoir (5, 51, 52, 53, 54) sont disposés dans une surface de toit inclinée (112, 114).

*Fig. 1a*

*Fig. 1b*

*Fig. 1c*

*Fig. 1d*

*Fig. 2a*

*Fig. 2b*

*Fig. 2c*

*Fig. 3a*

*Fig. 3b*

*Fig. 3c*

*Fig. 3d*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4379236 A
- US 20070009348 A1
- US 10364795 B2
- GB 2440264 A
- EP 3150847 A1
- US 20050074324 A1